# EUROPEAN PATENT SPECIFICATION

(11) **EP 1 994 088 B1**
(45) Date of publication and mention of the grant of the patent: **09.01.2013**
(21) Application number: 07866984.3
(22) Date of filing: 17.01.2007
(51) Int. Cl.: C08K 9/06, C08L 83/04, C09K 3/10

(54) **SEALANT COMPOSITION CONTAINING INORGANIC-ORGANIC NANOCOMPOSITE FILLER**
VERSIEGELUNGSZUSAMMENSETZUNG MIT EINEM ANORGANISCH-ORGANISCHEN NANOVERBUNDFÜLLMITTEL
COMPOSITION SCELLANTE CONTENANT UN NANOCOMPOSITE INORGANIQUE-ORGANIQUE

(30) Priority: 20.01.2006 US 336760
(43) Date of publication of application: 26.11.2008
(73) Proprietor: Momentive Performance Materials Inc., Albany, NY 12211 (US)
(72) Inventor: WILLIAMS, David A., Ganesvoort, NY 12831 (US); KUMAR, Vikram, Bangalore 560017 (IN); NESAKUMAR, Edward J., Bangalore 560017 (IN); RAMAKRISHNAN, Indumathi, Bangalore 560037 (IN)
(74) Representative: Zinnecker, Armin
(86) International application number: PCT/US2007/001237
(87) International publication number: WO 2008/051261

(56) References cited:
- EP-A- 0 994 151
- EP-A- 1 457 527
- WO-A-2004/113429
- WO-A-2007/081898
- US-A- 5 266 631
- US-A- 5 972 448
- US-A1- 2005 192 387

## Description

### FIELD OF THE INVENTION

This invention relates to a room temperature curable composition exhibiting, when cured, low permeability to gas(es).

### BACKGROUND OF THE INVENTION

Room temperature curable (RTC) compositions are well known for their use as sealants. In the manufacture of Insulating Glass Units (IGU), for example, panels of glass are placed parallel to each other and sealed at their periphery such that the space between the panels, or the inner space, is completely enclosed. The inner space is typically filled with a gas or mixture of gases of low thermal conductivity, e.g. argon. Current room temperature curable silicone sealant compositions, while effective to some extent, still have only a limited ability to prevent the loss of insulating gas from the inner space of an IGU. Over time, the gas will escape reducing the thermal insulation effectiveness of the IGU to the vanishing point.

The addition of clay materials to polymers is known in the art, however, incorporating clays into polymers may not provide a desirable improvement in the physical properties, particularly mechanical properties, of the polymer. This may be due, for example, to the lack of affinity between the clay and the polymer at the interface, or the boundary, between the clay and polymer within the material. The affinity between the clay and the polymer may improve the physical properties of the resulting nanocomposite by allowing the clay material to uniformly disperse throughout the polymer. The relatively large surface area of the clay, if uniformly dispersed, may provide more interfaces between the clay and polymer, and may subsequently improve the physical properties, by reducing the mobility of the polymer chains at these interfaces. By contrast, a lack of affinity between the clay and polymer may adversely affect the strength and uniformity of the composition by having pockets of clay concentrated, rather than uniformly dispersed, throughout the polymer. Affinity between clays and polymers is related to the fact that clays, by nature, are generally hydrophilic whereas polymers are generally hydrophobic.

US 2005/192387 A1 discloses an RTC silicone composition comprising a silanol-terminated diorganopolysiloxane, a crosslinker, a catalyst, and a filler. Suitable fillers comprise layered inorganic materials such as graphite or clay are mentioned.

EP 1 457 527 A discloses curable polymer compositions which result in cured articles having an enhanced weatherability and flame retardancy. The compositions comprise a polyvinyl or polyether polymer and a phyllosilicate filler swollen with a quaternary alkyl ammonium ion salt comprising an alkyl chain or a polyoxyalkylene chain.

WO 2004/113429 A discloses polyolefin/wax compositions comprising modified clay particles as fillers. Modification of the clay particles includes surface treatment with both a quaternary ammonium and a surfactant having long alkyl chains. That way, the recrystallization temperature on their surface with the polymer recrystallization temperature, in order to yield an improved gas permeability to the polymer composition.

US 5,972,448 A relates to the production of PET polymer materials having a reduced permeability to carbon dioxide due to the incorporation of clay as a filler.

A need therefore exists for an RTC composition of reduced gas permeability compared to that of known RTC compositions. When employed as the sealant for an IGU, an RTC composition of reduced gas permeability will retain the intra-panel insulating gas for a longer period of time compared to that of a more permeable RTC composition and will therefore extend the insulating properties of the IGU over a longer period of time.

### SUMMARY OF THE INVENTION

The present invention is based on the discovery that curable silanol-terminated diorganopolysiloxane combined with filler of a certain type upon curing exhibits reduced permeability to gas. The composition is especially suitable for use as a sealant where high gas barrier properties together with the desired characteristics of softness, processability and elasticity are important performance criteria.

In accordance with the present invention, there is provided a curable composition comprising:
a) at least one silanol-terminated diorganopolysiloxane;
b) at least one crosslinker for the silanol-terminated diorganopolysiloxane(s);
c) at least one catalyst for the crosslinking reaction;
d) a gas barrier enhancing amount of at least one inorganic-organic nanocomposite as defined in claim 1; and, optionally,
e) at least one solid polymer having a permeability to gas that is less than the permeability of the crosslinked diorganopolysiloxane(s).

When used as a gas barrier, e.g., in the manufacture of an IGU, the foregoing composition reduces the loss of gas(es) thus providing a longer service life of the article in which it is employed.

### BRIEF DESCRIPTION OF THE DRAWINGS

Fig. 1 is a graphic presentation of permeability data for the sealant compositions of Comparative Example 1 and Examples 1 and 2.

Fig. 2 is a graphic presentation of permeability data for the sealant compositions of Comparative Example 2 and Example 3.

Fig. 3 is a graphic presentation of permeability data for the sealant compositions of Comparative Example 3 and Examples 4 and 5.

### DETAILED DESCRIPTION OF THE INVENTION

The curable sealant composition of the present invention is obtained by mixing a) at least one silanol-terminated diorganopolysiloxane; b) at least one crosslinker for the silanol-terminated diorganopolysiloxane(s); c) at least one catalyst for the crosslinking reaction; d) a gas barrier enhancing amount of at least one inorganic-organic nanocomposite; and, optionally, e) at least one solid polymer having a permeability to gas that is less than the permeability of the crosslinked diorganopolysiloxane(s), the composition following curing exhibiting low permeability to gas(es).

The compositions of the invention are useful for the manufacture of sealants, coatings, adhesives, gaskets, and the like, and are particularly suitable for use in sealants intended for insulating glass units.

When describing the invention, the following terms have the following meanings, unless otherwise indicated.

### Definitions

The term "exfoliation" as used herein describes a process wherein packets of nanoclay platelets separate from one another in a polymer matrix. During exfoliation, platelets at the outermost region of each packet cleave off, exposing more platelets for separation.

The term "gallery" as used herein describes the space between parallel layers of clay platelets. The gallery spacing changes depending on the nature of the molecule or polymer occupying the space. An interlayer space between individual nanoclay platelets varies, again depending on the type of molecules that occupy the space.

The term "intercalant" as used herein includes any inorganic or organic compound capable of entering the clay gallery and bonding to its surface.

The term "intercalate" as used herein designates a clay-chemical complex wherein the clay gallery spacing has increased due to the process of surface modification. Under the proper conditions of temperature and shear, an intercalate is capable of exfoliating in a resin matrix.

As used herein; the term "intercalation" refers to a process for forming an intercalate.

The expression "inorganic nanoparticulate" as used herein describes layered inorganic material, e.g., clay, with one or more dimensions, such as length, width or thickness, in the nanometer size range and which is capable of undergoing ion exchange.

The expression "low permeability to gas(es)" as applied to the cured composition of this invention shall be understood to mean an argon permeability coefficient of not greater than about 900 barrers (1 barrer=10⁻¹⁰ (STP)/cm sec(cmHg)) measured in accordance with the constant pressure variable-volume method at a pressure of 100 psi and temperature of 25°C.

The expression "modified clay" as used herein designates a clay material, e.g., nanoclay, which has been treated with any inorganic or organic compound that is capable of undergoing ion exchange reactions with the cations present at the interlayer surfaces of the clay.

The term "nanoclay" as used herein describes clay materials that possess a unique morphology with one dimension being in the nanometer range. Nanoclays can form chemical complexes with an intercalant that ionically bonds to surfaces in between the layers making up the clay particles. This association of intercalant and clay particles results in a material which is compatible with many different kinds of host resins permitting the clay filler to disperse therein.

As used herein, the term "nanoparticulate" refers to particle sizes, generally determined by diameter, less than about 1000 nm.

As used herein, the term "platelets" refers to individual layers of the layered material.

The curable composition of the present invention includes at least one silanol-terminated diorganopolysiloxanes (a). Suitable silanol-terminated diorganopolysiloxanes (a) include those of the general formula:

MₐD_{b}D'_{c}

wherein "a" is 2, and "b" is equal to or greater than 1 and "c" is zero or positive; M is

(HO)_{3-x-y}R²¹ₓR²²_{y}SiO_{1/2}

wherein "x" is 0, 1 or 2 and "y" is either 0 or 1, subject to the limitation that x + y is less than or is equal to 2, R²¹ and R²² each independently is a monovalent hydrocarbon group up to 60 carbon atoms; D is

R²³R²⁴SiO_{2/2}

wherein R³³ and R³⁴ each independently is a monovalent hydrocarbon group up to 60 carbon atoms; and D' is

R²⁵R²⁶SiO_{2/2}

wherein R²⁵ and R²⁶ each independently is a monovalent hydrocarbon group up to 60 carbon atoms.

Suitable crosslinkers (b) for the silanol-terminated diorganopolysiloxane(s) present in the composition of the invention include alkylsilicates of the general formula:

(R¹⁴O)(R¹⁵O)(R¹⁶O)(R¹⁷O)Si

wherein R¹⁴, R¹⁵, R¹⁶ and R¹⁷ each independently is a monovalent hydrocarbon group up to 60 carbon atoms. Crosslinkers of this type include, n-propyl silicate, tetraethylortho silicate and methyltrimethoxysilane and similar alkyl-substituted alkoxysilane compounds, and the like.

Suitable catalysts (c) for the crosslinking reaction of the silanol-terminated diorganopolysiloxane(s) can be any of those known to be useful for facilitating the crosslinking of such siloxanes. The catalyst can be a metal-containing or non-metallic compound. Examples of useful metal-containing compounds include those of tin, titanium, zirconium, lead, iron cobalt, antimony, manganese, bismuth and zinc.

In one embodiment of the present invention, tin-containing compounds useful as crosslinking catalysts include: dibutyltindilaurate, dibutyltindiacetate, dibutyltindimethoxide, tinoctoate, isobutyltintriceroate, dibutyltinoxide, soluble dibutyl tin oxide, dibutyltin bis-diisooctylphthalate, bis-tripropoxysilyl dioctyltin, dibutyltin bis-acetylacetone, silylated dibutyltin dioxide, carbomethoxyphenyl tin tris-uberate, isobutyltin triceroate, dimethyltin dibutyrate, dimethyltin di-neodecanoate, triethyltin tartarate, dibutyltin dibenzoate, tin oleate, tin naphthenate, butyltintri-2-ethylhexylhexoate, tinbutyrate, diorganotin bis β-diketonates, and the like. Useful titanium-containing catalysts include: chelated titanium compounds, e.g., 1,3-propanedioxytitanium bis(ethylacetoacetate), di-isopropoxytitanium bis(ethylacetoacetate), and tetraalkyl titanates, e.g., tetra n-butyl titanate and tetraisopropyl titanate. In yet another embodiment of the present invention, diorganotin bis β-diketonates is used for facilitating crosslinking in silicone sealant composition.

Inorganic-organic nanocomposite (d) of the present invention is comprised of at least one inorganic component which is a layered inorganic nanoparticulate and at least one organic component which is a quaternary ammonium organopolysiloxane.

The inorganic nanoparticulate of the present invention can be natural or synthetic such as smectite clay, and should have certain ion exchange properties as in smectite clays, rectorite, vermiculite, illite, micas and their synthetic analogs, including laponite, synthetic mica-montmorillonite and tetrasilicic mica.

The nanoparticulates can possess an average maximum lateral dimension (width) in a first embodiment of between about 0.01 µm and about 10 µm, in a second embodiment between about 0.05 µm and about 2 µm, and in a third embodiment between about 0.1 µm and about 1 µm. The average maximum vertical dimension (thickness) of the nanoparticulates can in general vary in a first embodiment between about 0.5 nm and about 10 nm and in a second embodiment between about 1 nm and about 5 nm.

Useful inorganic nanoparticulate materials of the invention include natural or synthetic phyllosilicates, particularly smectic clays such as montmorillonite, sodium montmorillonite, calcium montmorillonite, magnesium montmorillonite, nontronite, beidellite, volkonskoite, laponite, hectorite, saponite, sauconite, magadite, kenyaite, sobockite, svindordite, stevensite, talc, mica, kaolinite, vermiculite, halloysite, aluminate oxides, or hydrotalcites, micaceous minerals such as illite and mixed layered illite/smectite minerals such as rectorite, tarosovite, ledikite and admixtures of illites with one or more of the clay minerals named above. Any swellable layered material that sufficiently sorbs the organic molecules to increase the interlayer spacing between adjacent phyllosilicate platelets to at least about 5 angstroms, or to at least about 10 angstroms, (when the phyllosilicate is measured dry) can be used in producing the inorganic-organic nanocomposite of the invention.

The modified inorganic nanoparticulate of the invention is obtained by contacting quantities of layered inorganic particulate possessing exchangeable cation, e.g., Na⁺, Ca²⁺, Al³⁺, Fe²⁺, Fe³⁺, and Mg²⁺, with at least one ammonium-containing organopolysiloxane. The resulting modified particulate is inorganic-organic nanocomposite (d) possessing intercalated organopolysiloxane ammonium ions.

The ammonium-containing organopolysiloxane contains two ammonium groups. The quaternary ammonium groups are positioned at the terminal ends of the organopolysiloxane.

The layered inorganic nanoparticulate compositions of the present invention need not be converted to a proton exchange form. Typically, the intercalation of an organopolysiloxane ammonium ion into the layered inorganic nanoparticulate material is achieved by cation exchange using solvent and solvent-free processes. In the solvent-based process, the organopolysiloxane ammonium component is placed in a solvent that is inert toward polymerization or coupling reaction. Particularly suitable solvents are water or water-ethanol, water-acetone and like water-polar co-solvent systems. Upon removal of the solvent, the intercalated particulate concentrates are obtained. Ih the solvent-free process, a high shear blender is usually required to conduct the intercalation reaction. The inorganic-organic nanocomposite may be in a suspension, gel, paste or solid forms.

The ammonium-containing organopolysiloxane compounds described herein are macroscopically spherical shaped particles with a diameter of 0.01 to 3.0 mm, a specific surface area of 0 to 1000 m²/g, a specific pore volume of 0 to 5.0 ml/g, a bulk density of 5.0 to 1000 g/l as well as a dry substance basis in relation to volume of 50 to 750 g/l.

One method of preparing an ammonium-containing organopolysiloxane involves reacting a primary, secondary, or tertiary aminosilane possessing at least one hydrolysable alkoxy group, with water, optionally in the presence of a catalyst, to achieve hydrolysis and subsequent condensation of the silane and produce amine-terminated organopolysilane which is thereafter quaternized with a suitable quarternizing reactant such as a mineral acid and/or alkyl halide to provide the ammonium-containing organopolysiloxane. A method of this type is described in U.S. Patent No. 5,130,396. In this connection, U.S. Patent No. 6,730,766, describes processes for the manufacture of quaternized polysiloxane by the reaction of epoxy-functional polysiloxane.

The ammonium-containing organopolysiloxanes of the invention are prepared by quarternizing a primary, secondary, or tertiary amine-containing organopolysiloxane with quaternizing reactant. The amine-containing organopolysiloxanes have the general formula: 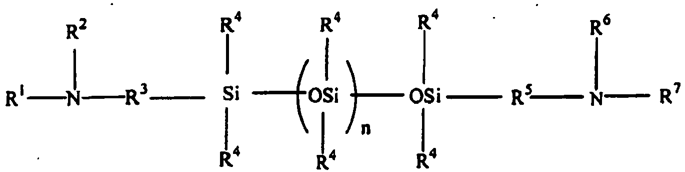 wherein R¹, R² R⁶, and R⁷ each independently is H, hydrocarbyl of up to 30 carbon atoms, e.g., alkyl, cycloalkyl, aryl, alkaryl, aralkyl, etc., or R¹ and R² together or R⁶ and R⁷ together form a divalent bridging group of up to 12 carbon atoms, R³ and R⁵ each independently is a divalent hydrocarbon bridging group of up to 30 carbon atoms, optionally containing one or more oxygen and/or nitrogen atoms in the chain, e.g., straight or branched chain alkylene of from 1 to 8 carbons such as -CH₂-, -CH₂ CH₂-, -CH₂CH₂CH₂-, -CH₂-C(CH₃)-CH₂-, -CH₂CH₂CH₂ CH₂-, etc., each R⁴ independently is an alkl group, and n is from 1 to 20 and advantageously is from 6 to 12.

These and similar amine-containing organopolysiloxanes can be obtained by known and conventional procedures e.g., by reacting an olefinic amine such as allyamine with a polydiorganosiloxane possessing Si-H bonds in the presence of a hydrosilation catalyst, such as, a platinum-containing hydrosilation catalyst as described in U.S. Patent No. 5,026,890,

Specific amine-containing organopolysiloxanes that are useful for preparing the ammonium-containing organopolysiloxanes herein include the commercial mixture of 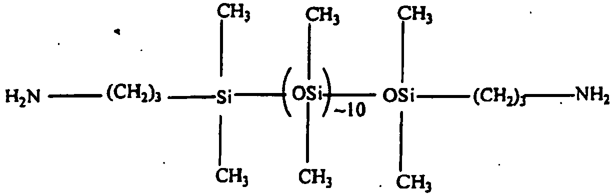 and

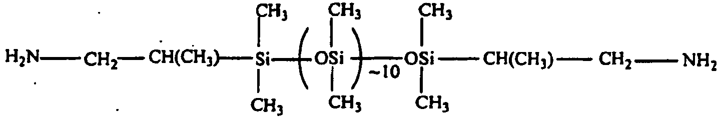

Optionally, the curable composition herein can also contain at least one solid polymer (e) having a permeability to gas that is less than the permeability of the crosslinked diorganopolysiloxane. Suitable polymers include polyethylenes such as low density polyethylene (LDPE), very low density polyethylene (VLDPE), linear low density polyethylene (LLDPE) and high density polyethylene (HDPE); polypropylene (PP), polyisobutylene (PIB), polyvinyl acetate(PVAc), polyvinyl alcohol (PVoH), polystyrene, polycarbonate, polyester, such as, polyethylene terephthalate (PET), polybutylene terephthalate (PBT), polyethylene napthalate (PEN), glycol-modified polyethylene terephthalate (PETG); polyvinylchloride (PVC), polyvinylidene chloride, polyvinylidene floride, thermoplastic polyurethane (TPU), acrylonitrile butadiene styrene (ABS), polymethylmethacrylate (PMMA), polyvinyl fluoride (PVF), Polyamides (nylons), polymethylpentene, polyimide (PI), polyetherimide (PEI), polether ether ketone (PEEK), polysulfone , polyether sulfone, ethylene chlorotrifluoroethylene, polytetrafluoroethylene (PTFE), cellulose acetate, cellulose acetate butyrate, plasticized polyvinyl chloride, ionomers (Surtyn), polyphenylene sulfide (PPS), styrene-maleic anhydride, modified polyphenylene oxide (PPO), and the like and mixture thereof.

The optional polymer(s) can also be elastomeric in nature, examples include, but are not limited to ethylene- propylene rubber (EPDM), polybutadiene, polychloroprene, polyisoprene, polyurethane (TPU), styrene-butadiene-styrene (SBS), styrene-ethylene-butadiene-styrene (SEEBS), polymethylphenyl siloxane (PMPS), and the like.

These optional polymers can be blended either alone or in combinations or in the form of coplymers, e.g. polycarbonate-ABS blends, polycarbonate polyester blends, grafted polymers such as, silane grafted polyethylenes, and silane grafted polyurethanes.

In one embodiment of the present invention, the curable composition contains a polymer selected from the group consisting of low density polyethylene (LDPE), very low density polyethylene (VLDPE), linear low density polyethylene (LLDPE), high density polyethylene (HDPE), and mixtures thereof. In another embodiment of the invention, the curable composition has a polymer selected from the group consisting of low density polyethylene (LDPE), very low density polyethylene (VLDPE), linear low density polyethylene (LLDPE), and mixture thereof. In yet another embodiment of the present invention, the optional polymer is a linear low density polyethylene (LLDPE).

The curable sealant composition can contain one or more other fillers in addition to inorganic-organic nanocomposite component (d). Suitable additional fillers for use herein include precipitated and colloidal calcium carbonates which have been treated with compounds such as stearic acid or stearate ester; reinforcing silicas such as fumed silicas, precipitated silicas, silica gels and hydrophobized silicas and silica gels; crushed and ground quartz, alumina, aluminum hydroxide, titanium hydroxide, diatomaceous earth, iron oxide, carbon black, graphite, mica, talc, and the like, and mixtures thereof.

The curable sealant composition of the present invention can also include one or more alkoxysilanes as adhesion promoters. Useful adhesion promoters include N-2-aminoethyl-3-aminopropyltriethoxysilane, γ-aminopropyltriethoxysilane, γ-aminopropyltrimethoxysilane, aminopropyltrimethoxysilane, bis-γ-trimethoxysilypropyl)amine, N-phenyl-γ-aminopropyltrimethoxysilane, triaminofunctionaltrimethoxysilane, γ-aminopropylmethyldiethoxysilane, γ-aminopropylmethyldiethoxysilane, methacryloxypropyltrimethoxysilane, methylaminopropyltrimethoxysilane, γ-glycidoxypropylethyldimethoxysilane, γ-glycidoxypropyltrimethoxysilane, γ-glycidoxyethyltrimethoxysilane, β-(3,4-epoxycyclohexyl)propyltrimethoxysilane, β-(3,4-epoxycyclohexyl) ethylmethyldimethoxysilane, isocyanatopmpyltriethoxysilane, isocyanatopropylmethyldimethoxysilane, β-cyanoethyltrimethoxysilane, γ-acryloxypropyltrimethoxysilane, γ-methacryloxypropylmethyldimethoxysilane, 4-amino-3,3,-dimethylbutyltrimethoxysilane, and N-ethyl-3-trimethoxysilyl-2-methylpropanamine, and the like. In one embodiment, the adhesion promoter can be a combination of n-2-aminoethyl-3-aminopropyltrimethoxysilane and 1,3,5-tris(trimethoxysilylpropyl)isocyanurate.

The compositions of the present invention can also include one or more non-ionic surfactants such as polyethylene glycol, polypropylene glycol, ethoxylated castor oil, oleic acid ethoxylate, alkylphenol ethoxylates, copolymers of ethylene oxide (EO) and propylene oxide (PO) and copolymers of silicones and polyethers (silicone polyether copolymers), copolymers of silicones and copolymers of ethylene oxide and propylene oxide and mixtures thereof.

The curable sealant compositions of the present invention can include still other ingredients that are conventionally employed in RTC silicone-containing compositions such as colorants, pigments, plasticizers, antioxidants, UV stabilizers, biocides, etc., in known and conventional amounts provided they do not interfere with the properties desired for the cured compositions.

The amounts of silanol-terminated diorganopolysiloxane(s), crosslinker(s), crosslinking catalyst(s), inorganic-oranic nanocomposite(s), optional solid polymers(s) of lower gas permeability than the crosslinked diorganopolysiloxane(s), optional filler(s) other than inorganic-organic nanocomposite, optional adhesion promoter(s) and optional ionic surfactant(s) can vary widely and, advantageously, can be selected from among the ranges indicated in the following table. The curable compositions herein contain inorganic-organic nanocomposite in an amount, of course, that enhances its gas barrier properties.

**TABLE 1: Ranges of Amounts (Weight Percent) of Components of the Curable Composition of the Invention**

| Components of the Curable Composition | First Range | Second Range | Third Range |
|---|---|---|---|
| Silanol-terminated Diorganopolysiloxane(s) | 50-99 | 70-99 | 80-85 |
| Crosslinker(s) | 0.1-10 | 0.3-5 | 0.5-1.5 |
| Crosslinking Catalyst(s) | 0.001-1 | 0.003-0.5 | 0.005-0.2 |
| Inorganic-organic Nanocomposite(s) | 0.1-50 | 10-30 | 15-20 |
| Solid Polymer(s) of Lower Gas Permeability than Crosslinked Dioganopoly-Siloxane(s) | 0-50 | 5-40 | 10-35 |
| Filler(s) other than Inorganic-organic Nanocomposite | 0-90 | 5-60 | 10-40 |
| Silane Adhesion Promoter(s) | 0-20 | 0.1-10 | 0.5-2 |
| Ionic Surfactant(s) | 0-10 | 0.1-5 | 0.5-0.75 |

The curable compositions herein can be obtained by procedures that are well known in the art, e.g., melt blending, extrusion blending, solution blending, dry mixing, blending in a Banbury mixer, etc., in the presence of moisture to provide a substantially homogeneous mixture.

Preferably, the methods of blending the diorganopolysiloxane polymers with polymers may be accomplished by contacting the components in a tumbler or other physical blending means, followed by melt blending in an extruder. Alternatively, the components can be melt blended directly in an extruder, Brabender or any other melt blending means.

The invention is illustrated by the following non-limiting examples.

### COMPARATIVE EXAMPLE 1 AND EXAMPLES 1-2

Inorganic-organic nanocomposite was prepared by first placing 10 g of amino propyl terminated siloxane ("GAP 10,"siloxane length of 10, from GE Silicones, Waterford, USA) in a 100 ml single-necked round bottomed flask and adding 4 ml of methanol available from Merck. 2.2 ml of concentrated HCl was added very slowly with stirring. The stirring was continued for 10 minutes. 900 ml of water was added to a 2000 ml three-necked round-bottomed flask fitted with condenser and overhead mechanical stirrer. 18 g of Cloisite Na⁺ (natural montmorillonite available from Southern Clay Products) clay was added to the water very slowly with stirring (stirring rate approximately 250 rpm). The ammonium chloride solution (prepared above) was then added very slowly to the clay-water mixture. The mixture was stirred for 1 hour and let stand overnight. The mixture was filtered through a Buckner funnel and the solid obtained was slurried with 800 ml of methanol, stirred for 20 minutes; and then the mixture was filtered. The solid was dried in oven at 80°C for approximately 50 hours.

To provide a 2.5 weight percent nanocomposite, 224.25g of OMCTS (octamethylcyclotetrasiloxane) and 5.75g of GAP 10 modified clay (inorganic-organic nanocomposite prepared above) were introduced into a three-necked round bottom flask fitted with overhead stirrer and condenser. The mixture was stirred at 250 rpm for 6 hours at ambient temperature. The temperature was increased to 175 C° while stirring continued. 0.3g of CsOH in 1ml of water was added in the reaction vessel through septum. After 15minutes, polymerization of OMCTS began and 0.5 ml of water was added with an additional 0.5 ml of water being added after 5 minutes. Heating and stirring were continued for 1hour after which 0.1 ml of phosphoric acid was added for neutralization. The pH of the reaction mixture was determined after 30 minutes. Stirring and heating were continued for another 30 minutes and the pH of the reaction mixture was again determined to assure complete neutralization. Distillation of cyclics was carried out at 175 C° and the mixture was thereafter cooled to room temperature.

The same procedure was followed with 5 weight percent of GAP 10 modified clay.

In-situ polymerization procedures were followed with 2.5 wt% and 5 wt% (see Table 1) GAP 10 modified clays (prepared above). The in-situ polymers with different amounts of clay were then used to make cured sheets as follows: In-situ silanol-terminated polydimethylsiloxanes (PDMS), (Silanol 5000, a silanol-terminated polydimethylsiloxane of 5000 cs nominal and Silanol 50,000, a silanol-terminated polydimethylsiloxane of 50,000 cs nominal, both available from Gelest, Inc.) GAP 10 modified clay formulations were mixed with NPS (n-propyl silicate, available from Gelest, Inc.) crosslinker and solubilized DBTO (solubilized dibutyl tin oxide, available from GE silicones, Waterford, USA) catalyst using a hand blender for 5-7 min with air bubbles being-removed by vacuum. The mixture was then poured into a Teflon sheet-forming mold and maintained for 24 hours under ambient conditions (25° C and 50% humidity). The partially cured sheets were removed from the mold after 24 hours and maintained at ambient temperature for seven days for complete curing.

**Table 1**

| | grams | wt% NPS | wt% DBTO |
|---|---|---|---|
| Comparative Example 1 | 50 | 2 | 1.2 |
| Example 1: In-situ silanol with 2.5 wt% of modified clay | 50 | 2 | 1.2 |
| Example 2: In-situ silanol with 5 wt% of modified clay | 50 | 2 | 1.2 |

The Argon permeability was measured using a gas permeability set-up. Argon permeability was measured using a gas permeability set-up as in the previous examples. The measurements were based on the variable-volume method at 690 MPa (100 psi) pressure and at a temperature of 25°C. Measurements were repeated under identical conditions 2-3 times in order to assure their reproducibility.

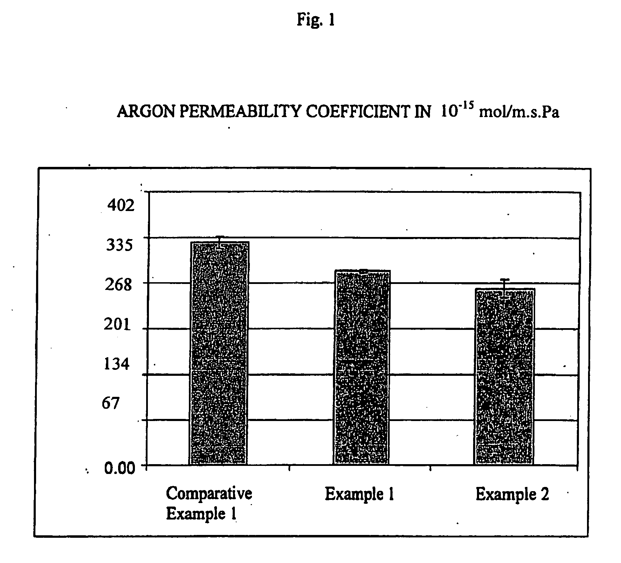

, The permeability data for Comparative Example 1 and Examples 1 and 2 are graphically presented in Figure 1.

### COMPARATIVE EXAMPLE 2 AND EXAMPLE 3

Example 3 (see Table 2) was prepared by mixing 45 grams of PDMS and 5 grams of GAP 10 modified clay (prepared above) and similar in-situ polymerization procedures were followed by mixing with 2 wt% NPS, and 1.2 wt% DBTO, using a hand blender for 5-7 minutes with air bubbles being removed by vacuum. Each blend was poured into a Teflon sheet-forming mold and maintained for 24 hours under ambient conditions (25° C and 50% humidity) to partially cure the PDMS components. The partially cured sheets were removed from the mold after 24 hours and maintained at ambient temperature for seven days for complete curing.

**Table 2**

| | grams | wt% NPS | wt% DBTO |
|---|---|---|---|
| Comparative Example 2: Silanol mixture | 50 | 2 | 1.2 |
| Example 3: In-situ silanol with 5 wt% of modified clay | 50 | 2 | 1.2 |

The Argon permeability was measured using a gas permeability set-up as in the previous examples. Argon permeability was measured using a gas permeability set-up as in the previous examples. The measurements were based on the variable-volume method at 690 MPa (100 psi) pressure and at a temperature of 25°C. Measurements were repeated under identical conditions 2-3 times in order to assure their reproducibility.

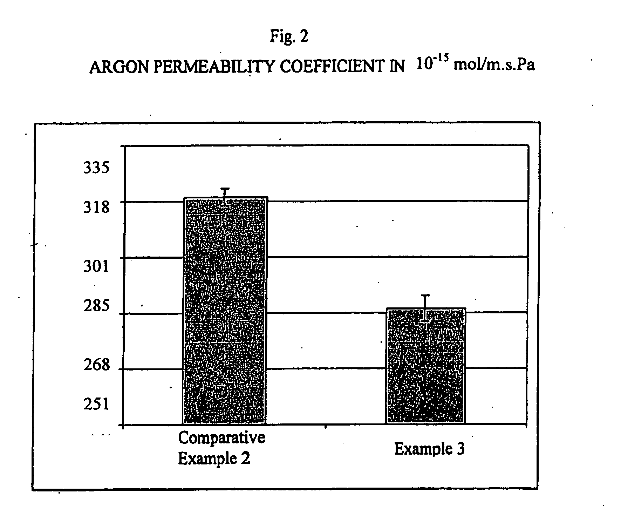

The permeability data for Comparative Example 2 and Example 3 are graphically presented in Figure 2.

### COMPARATIVE EXAMPLE 3 AND EXAMPLES 4 AND 5

The inorganic-organic nanocomposite of Examples 4 and 5 was prepared by introducing I grams of octadecyldimethyl(3-trimethoxysilyl propyl)) ammonium chloride (available from Gelest, Inc.) into a 100ml beaker and slowly adding 50 ml of methanol (available from Merck). 30 grams of Cloisite 15A ("C-15A," a montmorillonite clay modified with 125 milliequivalants of dimethyl dehydrogenated tallow ammonium chloride per 100 g of clay available from Southern Clay Products) clay was added very slowly to a 5 liter beaker containing a water: methanol solution (1:3 ratio, 3.5 L) and equipped with an overhead mechanical stirrer which stirred the mixture at a rate of approximately 400 rpm. The stirring continued for 12 hours. The octadecyldimethyl(3-trimethoxysilyl propyl)) ammonium chloride (prepared above) was then added very slowly. The mixture was stirred for 3 hours. Thereafter, the mixture was filtered through a Buckner funnel and the solid obtained was slurried with a water: methanol (1:3) solution several times before being filtered again. The solid was dried in oven at 80 C° for approximately 50 hours.

The above-indicated blends were then used to make cured sheets as follows: PDMS- silypropyl modified clay formulations were mixed with NPS and DBTO, as listed in Table 3, using a hand blender for 5-7 minutes with air bubbles being removed by vacuum. Each blend was poured into a Teflon sheet-forming mold and maintained for 24 hours under ambient conditions (25° C and 50% humidity) to partially cure the PDMS components. The partially cured sheets were removed from the mold after 24 hours and maintained at ambient temperature for seven days for complete curing.

**Table 3**

| | grams | wt% NPS | wt% DBTO |
|---|---|---|---|
| Comparative Example 3: Silanol mixture | 50 | 2 | 1.2 |
| Example 4: Silanol mixture with 5phr of silylpropyl modified clay | 50 | 2 | 1.2 |
| Example 5: Silanol mixture with 10phr of silylpropyl modified clay | 50 | 2 | 1.2 |

The Argon permeability was measured using a gas permeability set-up as in the previous examples. Argon permeability was measured using a gas permeability set-up as in the previous examples. The measurements were based on the variable-volume method at 690 MPa (100 psi) pressure and at a temperature of 25°C. Measurements were repeated under identical conditions 2-3 times in order to assure their reproducibility.

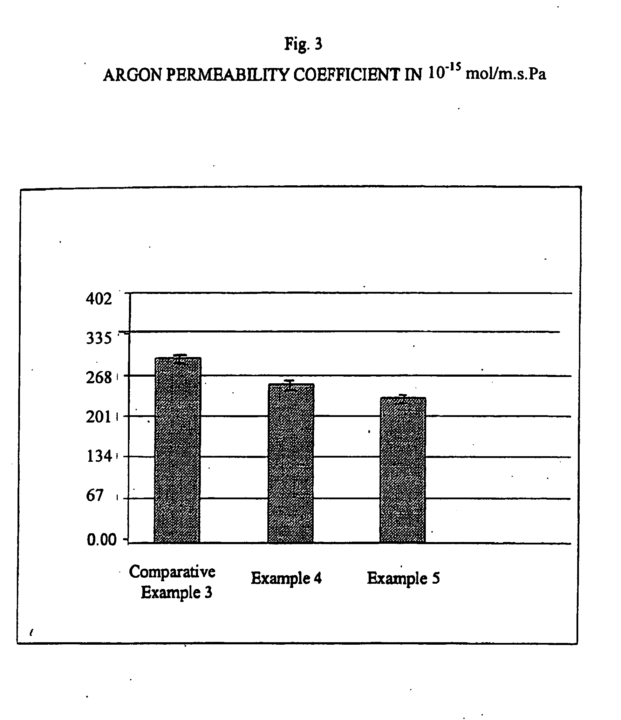

The permeability data for Comparative Example 3 and Examples 4 and 5 are graphically presented in Figure 3.

The permeability data are graphically presented in Figures 1, 2 and 3. As shown in the data, argon permeability in the case of the cured sealant compositions of the invention (Examples 1 and 2 of Figure 1, Example 3 of Figure 2 and Examples 4 and 5 of Figure 3) was significantly less than that of cured sealant compositions outside the scope of the invention (Comparative Examples 1-3 of Figures 1-3, respectively). In all, while the argon permeability coefficients of the sealant compositions of Comparative Examples 1, 2 and 3 exceed 318.10⁻¹⁵ mol/m.s.Pa (950 barrers) those of Examples 1-3, 4 and 5 illustrative of sealant compositions of this invention did not exceed 293.10⁻¹⁵ mol/m.s.Pa (875 barrers) and in some cases, were well below this level of argon permeability coefficient (see, in particular, examples 2, 4 and 5).

## Claims

1. A curable sealant composition comprising:
(a) at least one silanol-terminated diorganopolysiloxane;
(b) at least one crosslinker for the silanol-terminated diorganopolysiloxane(s);
(c) at least one catalyst for the crosslinking reaction; and
(d) a gas barrier enhancing amount of at least one inorganic-organic nanocomposite;
wherein
the inorganic-organic nanocomposite (d) comprises at least one inorganic component which is a layered inorganic nanoparticulate and at least one organic component which is a quaternary ammonium organopolysiloxane derivable from quaternizing an amine-containing organopolysiloxane having the formula: 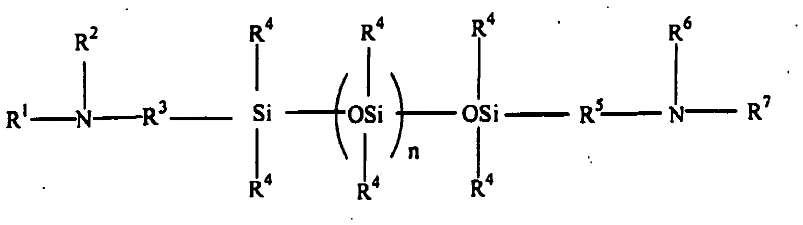 wherein
R¹, R², R⁶ and R⁷ each independently are H, a hydrocarbyl of up to 30 carbon atoms, or R¹ and R² together or R⁶ and R⁷ together form a divalent bridging group of up to 12 carbon atoms;
R³ and R⁵ each independently is a divalent hydrocarbon bridging group of up to 30 carbon atoms, optionally containing one or more oxygen and/or nitrogen atoms in the chain;
each R⁴ independently is an alkyl group; and
n is from 1 to 20.

2. The composition of claim 1 wherein crosslinker (b) is an alkylsilicate having the formula:
(R¹⁴O)(R¹⁵O)(R¹⁶O)(R¹⁷O)Si
where R¹⁴, R¹⁵, R¹⁶ and R¹⁷ are chosen independently from monovalent C₁ to C₆₀ hydrocarbon radicals.

3. The composition of any one of the preceding claims wherein the silanol-terminated diorganopolysiloxane (a) has the general formula:
MₐD_{b}D'_{c}
wherein
a is 2;
b is equal to or greater than 1;
c is zero or positive;
M is (HO)_{3-x-y}R²¹ₓR²²_{y}SiO_{1/2} wherein x is 0, 1 or 2 and y is either 0 or 1, subject to the limitation that x+y is less than or is equal to 2, R²¹ and R²² each independently is a monovalent hydrocarbon group up to 60 carbon atoms;
D is R²³R²⁴SiO_{2/2} wherein R²³ and R²⁴ each independently is a monovalent hydrocarbon group up to 60 carbon atoms; and
D' is R²⁵R²⁶SiO_{2/2} wherein R²⁵ and R²⁶ each independently is a monovalent hydrocarbon group up to 60 carbon atoms.

4. The composition of any one of the preceding claims wherein catalyst (c) is a tin catalyst, preferably selected from the group consisting of dibutyltindilaurate, dibutyltindiacetate, dibutyltindimethoxide, tinoctoate, isobutyltintriceroate, dibutyltinoxide, dibutyltin bis-diisooctylphthalate, bis-tripropoxysilyl dioctyltin, dibutyltin bis-acetylacetone, silylated dibutyltin dioxide, carbomethoxyphenyl tin tris-uberate, isobutyltin triceroate, dimethyltin dibutyrate, dimethyltin di-neodecanoate, triethyltin tartarate, dibutyltin dibenzoate, tin oleate, tin naphthenate, butyltintri-2-ethylhexylhexoate, tinbutyrate, diorganotin bis β-diketonates and mixtures thereof.

5. The composition of any one of the preceding claims wherein the layered inorganic nanoparticulate possess exchangeable cation which is at least one member selected from the group of Na⁺, Ca²⁺, Al³⁺, Fe²⁺, Fe³⁺, Mg²⁺, and mixtures thereof.

6. The composition of any one of the preceding claims wherein the layered nanoparticulate is at least one member selected from the group consisting of montmorillonite, sodium montmorillonite, calcium montmorillonite, magnesium montmorillonite, nontronite, beidellite, volkonskoite, laponite, hectorite, saponite, sauconite, magadite, kenyaite, sobockite, svindordite, stevensite, vermiculite, halloysite, aluminate oxides, hydrotalcite, illite, rectorite, tarosovite, ledikitekaolinite and, mixtures thereof.

7. The composition of any one of the preceding claims additionally comprising at least one solid polymer having a permeability to gas that is less than the permeability of the crosslinked diorganopolysiloxane(s).

8. The composition of claim 7 wherein the solid polymer is selected from the group consisting of low density polyethylene, very low density polyethylene, linear low density polyethylene, high density polyethylene, polypropylene, polyisobutylene, polyvinyl acetate, polyvinyl alcohol, polystyrene, polycarbonate, polyester, such as, polyethylene terephthalate, polybutylene terephthalate, polyethylene napthalate, glycol-modified polyethylene terephthalate, polyvinylchloride, polyvinylidene chloride, polyvinylidene fluoride, thermoplastic polyurethane, acrylonitrile butadiene styrene, polymethylmethacrylate, polyvinyl fluoride, polyamides, polymethylpentene, polyimide, polyetherimide, polether ether ketone, polysulfone, polyether sulfone, ethylene chlorotrifluoroethylene, polytetrafluoroethylene, cellulose acetate, cellulose acetate butyrate, plasticized polyvinyl chloride, ionomers, polyphenylene sulfide, styrene-maleic anhydride, modified polyphenylene oxide, ethylene-propylene rubber, polybutadiene, polychloroprene, polyisoprene, polyurethane, styrene-butadiene-styrene, styrene-ethylene-butadiene-styrene, polymethylphenyl siloxane and mixtures thereof.

9. The composition of any one of the preceding claims additionally comprising at least one component selected from the group consisting of adhesion promoter, surfactant, colorant, pigment, plasticizer, filler other than inorganic-organic nanocomposite, antioxidant, UV stabilizer, and biocide.

10. The composition of claim 9 wherein the adhesion promoter is selected from the group consisting of N-2-aminoethyl-3-aminopropyltrimethoxysilane, 1,3,5-tris(trimethoxysilylpropyl)isocyanurate, γ-aminopropyltriethoxysilane, γ-aminopropyltrimethoxysilane, aminopropyltrimethoxysilane, bis-γ-trimethoxysilypropyl)amine, N-Phenyl-γ-aminopropyltrimethoxysilane, triaminofunctionaltrimethoxysilane, γ-aminopropylmethyldiethoxysilane, γ-aminopropylmethyldiethoxysilane, methacryloxypropyltrimethoxysilane, methylaminopropyltrimethoxysilane, γ-glycidoxypropylethyldimethoxysilane, γ-glycidoxypropyltrimethoxysilane, γ-glycidoxyethyltrimethoxysilane, β-(3,4-epoxycyclohexyl)propyltrimethoxysilane, β-(3,4-epoxycyclohexyl)ethylmethyldimethoxysilane, isocyanatopropyltriethoxysilane, isocyanatopropylmethyldimethoxysilane, β-cyanoethyltrimethoxysilane, γ-acryloxypropyltrimethoxysilane, γ-methacryloxypropylmethyldimethoxysilane, 4-amino-3,3,-dimethylbutyltrimethoxysilane, N-ethyl-3-trimethoxysilyl-2-methylpropanamine, and mixtures thereof.

11. The composition of claim 9 or 10 wherein the surfactant is a nonionic surfactant selected from the group consisting of polyethylene glycol, polypropylene glycol, ethoxylated castor oil, oleic acid ethoxylate, alkylphenol ethoxylates, copolymers of ethylene oxide and propylene oxide and copolymers of silicones and polyethers, copolymers of silicones and copolymers of ethylene oxide and propylene oxide and mixtures thereof, preferably selected from the group consisting of copolymers of ethylene oxide and propylene oxide, copolymers of silicones and polyethers, copolymers of silicones and copolymers of ethylene oxide and propylene oxide and mixtures thereof.

12. The composition of any of claims 9 to 11 wherein the filler other than the inorganic-organic nanocomposite is selected from the group consisting of calcium carbonate, precipitated calcium carbonate, colloidal calcium carbonate, calcium carbonate treated with compounds stearate or stearic acid, fumed silica, precipitated silica, silica gels, hydrophobized silicas, hydrophilic silica gels, crushed quartz, ground quartz, alumina, aluminum hydroxide, titanium hydroxide, clay, kaolin, bentonite montmorillonite, diatomaceous earth, iron oxide, carbon black and graphite, mica, talc, and mixtures thereof.

## Patentansprüche

1. Härtbare Dichtmittelzusammensetzung, welche umfasst:
(a) mindestens ein silanol-endständiges Diorganopolysiloxan;
(b) mindestens einen Vernetzer für das/die silanol-endständige(n) Diorganopolysiloxan(e);
(c) mindestens einen Katalysator für die Vernetzungsreaktion; und
(d) eine Gasbarrierenverbesserungsmenge mindestens eines anorganischen-organischen Nanokomposits;
wobei
das anorganische-organische Nanokomposit (d) umfasst: mindestens eine anorganische Komponente, die eine geschichtete anorganische nanopartikuläre Substanz ist, und mindestens eine organische Komponente, die ein quaternäres Ammonium-Organopolysiloxan ist, das aus Quaternisieren eines aminhaltigen Organopolysiloxans mit der Formel: 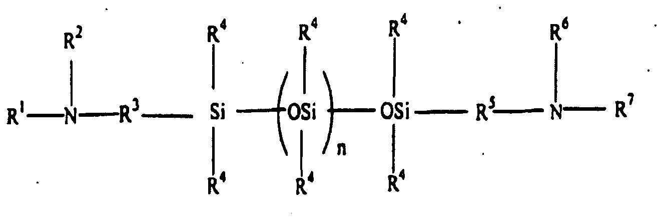 erhaltbar ist, wobei
R¹, R², R⁶ und R⁷ jeweils unabhängig H, ein Kohlenwasserstoffrest mit bis zu 30 Kohlenstoffatomen sind oder R¹ und R² zusammen oder R⁶ und R⁷ zusammen eine bivalente brückenbildende Gruppe mit bis zu 12 Kohlenstoffatomen bilden;
R³ und R⁵ jeweils unabhängig eine bivalente Kohlenwasserstoffbrückenbildungsgruppe mit bis zu 30 Kohlenstoffatomen ist, die optional ein oder mehrere Sauerstoff- und/oder Stickstoffatome in der Kette enthält;
jedes R⁴ unabhängig eine Alkylgruppe ist; und
n 1 bis 20 ist.

2. Zusammensetzung nach Anspruch 1, wobei der Vernetzer (b) ein Alkylsilikat mit der Formel:
(R¹⁴O)(R¹⁵O)(R¹⁶O)(R¹⁷O)Si
ist, wobei R¹⁴, R¹⁵, R¹⁶ und R¹⁷ unabhängig aus monovalenten C₁- bis C₆₀-Kohlenwasserstoffradikalen gewählt sind.

3. Zusammensetzung nach einem der vorhergehenden Ansprüche, wobei das silanol-endständige Diorganopolysiloxan (a) die allgemeine Formel:
MₐD_{b}D'_{c}
hat, wobei
a 2 ist;
b größer oder gleich 1 ist;
c null oder positiv ist;
M (HO)_{3-x-y'}R²¹ₓR²²_{y}SiO_{1/2} ist, wobei x 0, 1 oder 2 ist und y entweder 0 oder 1 ist, vorbehaltlich der Einschränkung, dass x+y kleiner oder gleich 2 ist, R²¹ und R²² jeweils unabhängig eine monovalente Kohlenwasserstoffgruppe mit bis zu 60 Kohlenstoffatomen ist;
D R²³R²⁴SiO_{2/2} ist, wobei R²³ und R²⁴ jeweils unabhängig eine monovalente Kohlenwasserstoffgruppe mit bis zu 60 Kohlenstoffatomen ist; und
D' R²⁵R²⁶SiO_{2/2} ist, wobei R²⁵ und R²⁶ jeweils unabhängig eine monovalente Kohlenwasserstoffgruppe mit bis zu 60 Kohlenstoffatomen ist.

4. Zusammensetzung nach einem der vorhergehenden Ansprüche, wobei der Katalysator (c) ein Zinnkatalysator ist, bevorzugt gewählt aus der Gruppe bestehend aus Dibutylzinndilaurat, Dibutylzinndiacetat, Dibutylzinndimethoxid, Zinnoctoat, Isobutylzinntriceroat, Dibutylzinnoxid, Dibutylzinn-bis-düsooctylphthalat, bis-Tripropoxysilyldioctylzinn, Dibutylzinn-bis-acetylaceton, silyliertem Dibutylzinndioxid, Carbomethoxyphenyl-Zinn-tris-uberat, Isobutylzinntriceroat, Dimethylzinndibutyrat, Dimethylzinn-di-neodecanoat, Triethylzinntartarat, Dibutylzinn-dibenzoat, Zinnoleat, Zinnnaphthenat, Butylzinntri-2-ethylhexylhexoat, Zinnbutyrat, Diorganozinn-bis-p-diketonaten und Mischungen derselben.

5. Zusammensetzung nach einem der vorhergehenden Ansprüche, wobei die geschichteten anorganischen Nanopartikel ein austauschbares Kation besitzen, das mindestens ein Element gewählt aus der Gruppe von Na⁺, Ca²⁺, Al³⁺, Fe²⁺, Fe³⁺, Mg²⁺ und Mischungen derselben ist.

6. Zusammensetzung nach einem der vorhergehenden Ansprüche, wobei die geschichteten Nanopartikel mindestens ein Element gewählt aus der Gruppe bestehend aus Montmorillonit, Natriummontmorillonit, Calciummontmorillonit, Magnesiummontmorillonit, Nontronit, Beidellit, Volkonskoit, Laponit, Hektorit, Saponit, Saukonit, Magadit, Kenyait, Sobockit, Svindordit, Stevensit, Vermiculit, Halloysit, Aluminatoxiden, Hydrotalcit, IIIit, Rectorit, Tarosovit, Ledikitekaolinit und Mischungen derselben sind.

7. Zusammensetzung nach einem der vorhergehenden Ansprüche, welche zusätzlich mindestens ein Festpolymer mit einer Permeabilität gegenüber Gas umfasst, die geringer als die Permeabilität des/der vernetzten Diorganopolysiloxans/Diorganopolysiloxane ist.

8. Zusammensetzung nach Anspruch 7, wobei das Festpolymer gewählt ist aus der Gruppe bestehend aus Polyethylen niedriger Dichte, Polyethylen sehr niedriger Dichte, linearem Polyethylen niedriger Dichte, Polyethylen hoher Dichte, Polypropylen, Polyisobutylen, Polyvinylacetat, Polyvinylalkohol, Polystyren, Polycarbonat, Polyester, wie etwa Polyethylenterephthalat, Polybutylenterephthalat, Polyethylennapthalat, glykolmodifiziertem Polyethylenterephthalat, Polyvinylchlorid, Polyvinylidenchlorid, Polyvinylidenfluorid, thermoplastischem Polyurethan, Acrylnitrilbutadienstyren, Polymethylmethacrylat, Polyvinylfluorid, Polyamiden, Polymethylpenten, Polyimid, Polyetherimid, Poletheretherketon, Polysulfon, Polyethersulfon, Ethylenchlortrifluorethylen, Polytetrafluorethylen, Celluloseacetat, Celluloseacetatbutyrat, plastifiziertem Polyvinylchlorid, Ionomeren, Polyphenylensulfid, Styrene-Maleinsäureanhydrid, modifiziertem Polyphenylenoxid, Ethylen-Propylen-Gummi, Polybutadien, Polychloropren, Polyisopren, Polyurethan, Styren-Butadien-Styren, Styren-Ethylen-Butadien-Styren, Polymethylphenylsiloxan und Mischungen derselben.

9. Zusammensetzung nach einem der vorhergehenden Ansprüche, welche zusätzlich mindestens eine Komponente gewählt aus der Gruppe bestehend aus Adhäsionsbeschleuniger, Tensid, Farbstoff, Pigment, Weichmacher, Füllstoff ausgenommen anorganischem-organischem Nanokomposit, Antioxidans, UV-Stabilisator und Biozid umfasst.

10. Zusammensetzung nach Anspruch 9, wobei der Adhäsionsbeschleuniger gewählt ist aus der Gruppe bestehend aus N-2-Aminoethyl-3-aminopropyltrimethoxysilan, 1,3,5-tris(trimethoxysilylpropyl)isocyanurat, γ-Aminopropyltriethoxysilan, γ-Aminopropyltrimethoxysilan, Aminopropyltrimethoxysilan, bis-γ-trimethoxysilypropyl)amin, N-Phenyl-γ-aminopropyltrimethoxysilan, triaminofunktionellem Trimethoxysilan, γ-Aminopropylmethyldiethoxysilan, γ-Aminopropylmethyldiethoxysilan, Methacryloxypropyltrimethoxysilan, Methylaminopropyltrimethoxysilan, γ-Glycidoxypropyiethyldimethoxysilan, γ-Glycidoxypropyltrimethoxysilan, γ-Glycidoxyethyltrimethoxysilan, ß-(3,4-Epoxycyclohexyl)propyltrimethoxysilan, β-(3,4-Epoxycyclohexyl)ethylmethyldimethoxysilan, Isocyanatopropyltriethoxysilan, Isocyanatopropylmethyldimethoxysilan, β-Cyanoethyltrimethoxysilan, γ-Acryloxypropyltrimethoxysilan, γ-Methacryloxypropylmethyldimethoxysilan, 4-Amino-3,3,-dimethylbutyltrimethoxysilan, N-Ethyl-3-trimethoxysilyl-2-methylpropanamin und Mischungen derselben.

11. Zusammensetzung nach Anspruch 9 oder 10, wobei das Tensid ein nichtionisches Tensid gewählt aus der Gruppe bestehend aus Polyethylenglykol, Polypropylenglykol, ethoxyliertem Kastoröl, Ölsäureethoxylat, Alkylphenolethoxylaten, Copolymeren von Ethylenoxid und Propylenoxid und Copolymere von Silikonen und Polyethern, Copolymeren von Siliconen und Copolymeren von Ethylenoxid und Propylenoxid und Mischungen derselben, vorzugsweise gewählt aus der Gruppe bestehend aus Copolymeren von Ethylenoxid und Propylenoxid, Copolymeren von Silikonen und Polyethern, Copolymeren von Silikonen und Copolymeren von Ethylenoxid und Propylenoxid und Mischungen derselben ist.

12. Zusammensetzung nach einem der Ansprüche 9 bis 11, wobei der Füllstoff mit Ausnahme des anorganischen-organischen Nanokomposits gewählt ist aus der Gruppe bestehend aus Calciumcarbonat, gefälltem Calciumcarbonat, kolloidem Calciumcarbonat, Calciumcarbonat behandelt mit den Verbindungen Stearat oder Stearinsäure, pyrogener Kieselsäure, gefällter Kieselsäure, Kieselsäuregelen, hydrophobierten Kieselsäuren, hydrophilen Kieselsäuregelen, zerstoßenem Quartz, gemahlenem Quartz, Aluminiumoxid, Aluminiumhydroxid, Titanhydroxid, Ton, Kaolin, Bentonitmontmorillonit, Diatomeenerde, Eisenoxid, Carbon Black und Graphit, Glimmer, Talkum und Mischungen derselben.

## Revendications

1. Composition scellante durcissable comprenant:
(a) au moins un diorganopolysiloxane à terminaison silanol;
(b) au moins un agent de réticulation pour le(s) diorganopolysiloxane(s) à terminaison silanol;
(c) au moins un catalyseur pour la réaction de réticulation; et
(d) une barrière contre les gaz augmentant la quantité d'au moins un nanocomposite inorganique-organique;
dans laquelle
le nanocomposite inorganique-organique (d) comprend au moins un composant inorganique qui est un composé nanoparticulaire inorganique stratifié et au moins un composant organique qui est un organopolysiloxane d'ammonium quaternaire pouvant être dérivé de la quaternisation d'un organopolysiloxane contenant une amine répondant à la formule: 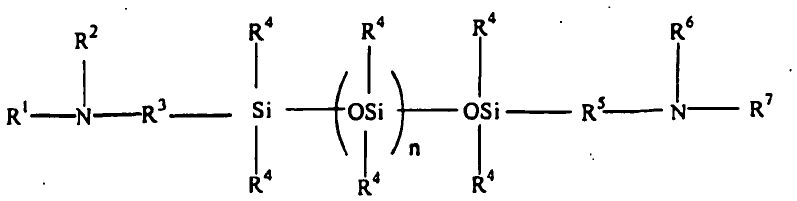 dans laquelle
R¹, R², R⁶ et R⁷ représentent chacun indépendamment un atome d'H, un groupe hydrocarbyle pouvant comporter jusqu'à 30 atomes de carbone, ou R¹ et R² conjointement ou R⁶ et R⁷ conjointement forment un groupe de pontage divalent pouvant comporter jusqu'à 12 atomes de carbone;
R³ et R⁵ représentent chacun indépendamment un groupe de pontage hydrocarboné divalent pouvant comporter jusqu'à 30 atomes de carbone, contenant optionnellement un ou plusieurs atomes d'oxygène et/ou d'azote dans la chaîne;
chaque radical R⁴ représente indépendamment un groupe alkyle; et
n vaut de 1 à 20.

2. Composition selon la revendication 1 dans laquelle l'agent de réticulation (b) est un alkylsilicate répondant à la formule:
(R¹⁴O) (R¹⁵O) (R¹⁶O) (R¹⁷O)Si
où R¹⁴, R¹⁵, R¹⁶ et R¹⁷ sont choisis indépendamment parmi les radicaux hydrocarbonés monovalents en C₁ à C₆₀.

3. Composition selon l'une quelconque des revendications précédentes dans laquelle le diorganopolysiloxane à terminaison silanol (a) répond à la formule générale:
MₐD_{b}D'_{c}
dans laquelle
a vaut 2;
b est supérieur ou égal à 1;
c vaut zéro ou est positif;
M représente un groupe (HO)_{3-x-y}R²¹ₓR²²_{y}SiO_{1/2}, formule dans laquelle x vaut 0, 1 ou 2 et y vaut soit 0 soit 1, à condition que x + y soit inférieur ou égal à 2, R²¹ et R²² représentent chacun indépendamment un groupe hydrocarboné monovalent comportant jusqu'à 60 atomes de carbone;
D représente un groupe R²³R²⁴SiO_{2/2}, formule dans laquelle R²³ et R²⁴ représentent chacun indépendamment un groupe hydrocarboné monovalent comportant jusqu'à 60 atomes de carbone; et
D' représente un groupe R²⁵R²⁶SiO_{2/2}, formule dans laquelle R²⁵ et R²⁶ représentent chacun indépendamment un groupe hydrocarboné monovalent comportant jusqu'à 60 atomes de carbone.

4. Composition selon l'une quelconque des revendications précédentes dans laquelle le catalyseur (c) est un catalyseur à base d'étain, de préférence choisi dans le groupe constitué du dilaurate de dibutylétain, du diacétate de dibutylétain, du diméthoxyde de dibutylétain, de l'octoate d'étain, du tricéroate d' isobutylétain, de l'oxyde de dibutylétain, du bis-diisooctylphtalate de dibutylétain, du bis-tripropoxysilyldioctylétain, de la bis-acétylacétone de dibutylétain, du dioxyde de dibutylétain silylé, du tris-ubérate de carbométhoxyphénylétain, du tricéroate d'isobutylétain, du dibutyrate de diméthylétain, du di-néodécanoate de diméthylétain, du tartrate de triéthylétain, du dibenzoate de dibutylétain, de l'oléate d'étain, du naphténate d'étain, du tri-2-éthylhexylhexoate de butylétain, du butyrate d'étain, des bis-β-dicétonates diorganostanniques et de leurs mélanges.

5. Composition selon l'une quelconque des revendications précédentes dans laquelle le composé nanoparticulaire inorganique stratifié possède un cation échangeable qui est au moins un élément choisi dans le groupe constitué du Na⁺, du Ca²⁺, de l'AI³⁺, du Fe²⁺, du Fe³⁺, du Mg²⁺ et de leurs mélanges.

6. Composition selon l'une quelconque des revendications précédentes dans laquelle le composé nanoparticulaire stratifié est au moins un élément choisi dans le groupe constitué de la montmorillonite, de la montmorillonite sodique, de la montmorillonite calcique, de la montmorillonite de magnésium, de la nontronite, de la beidellite, de la volkonskoïte, de la laponite, de l'hectorite, de la saponite, de la sauconite, de la magadite, de la kenyaite, de la sobockite, de la svindordite, de la stevensite, de la vermiculite, de l'halloysite, des oxydes d' aluminate, de l'hydrotalcite, de l'illite, de la rectorite, de la tarosovite, de la lédikite, de la kaolinite et de leurs mélanges.

7. Composition selon l'une quelconque des revendications précédentes comprenant en outre au moins un polymère solide ayant une perméabilité au gaz qui est inférieure à la perméabilité du (des) diorganopolysiloxane(s) réticulé(s).

8. Composition selon la revendication 7 dans laquelle le polymère solide est choisi dans le groupe constitué du polyéthylène basse densité, du polyéthylène très basse densité, du polyéthylène linéaire basse densité, du polyéthylène haute densité, du polypropylène, du polyisobutylène, de l'acétate de polyvinyle, de l'alcool polyvinylique, du polystyrène, du polycarbonate, du polyester, tel que le téréphtalate de polyéthylène, le téréphtalate de polybutylène, le napthalate de polyéthylène, le téréphtalate de polyéthylène modifié par le glycol, le chlorure de polyvinyle, le chlorure de polyvinylidène, le fluorure de polyvinylidène, le polyuréthane thermoplastique, l'acrylonitrile butadiène styrène, le polyméthylméthacrylate, le fluorure de polyvinyle, les polyamides, le polyméthylpentène, le polyimide, le polyétherimide, la polyéther éther cétone, la polysulfone, la polyéther sulfone, l'éthylène chlorotrifluoroéthylène, le polytétrafluoroéthylène, l'acétate de cellulose, l'acéto-butyrate de cellulose, le chlorure de polyvinyle plastifié, les ionomères, le sulfure de polyphénylène, le styrène-anhydride maléique, l'oxyde de polyphénylène modifié, le caoutchouc d'éthylène-propylène, le polybutadiène, le polychloroprène, le polyisoprène, le polyuréthane, le styrène-butadiène-styrène, le styrène-éthylène-butadiène-styrène, le polyméthylphénylsiloxane et leurs mélanges.

9. Composition selon l'une quelconque des revendications précédentes comprenant en outre au moins un composant choisi dans le groupe constitué des promoteurs d'adhérence, des tensioactifs, des colorants, des pigments, des plastifiants, des charges autres qu'un nanocomposite inorganique-organique, des antioxydants, des stabilisants UV et des biocides.

10. Composition selon la revendication 9 dans laquelle le promoteur d'adhérence est choisi dans le groupe constitué du N-2-aminoéthyl-3-aminopropyltriméthoxysilane, du 1,3,5-tris(triméthoxysilylpropyl)isocyanurate, du γ-aminopropyltriéthoxysilane, du γ-aminopropyltriméthoxysilane, de l'aminopropyltriméthoxysilane, de la bis-γ-triméthoxysilypropylamine, du N-phényl-γ-aminopropyltriméthoxysilane, du triméthoxysilane triaminofonctionnel, du γ-aminopropylméthyldiéthoxysilane, du γ-aminopropylméthyldiéthoxysilane, du méthacryloxypropyltriméthoxysilane, du méthylaminopropyltriméthoxysilane, du γ-glycidoxypropyléthyldiméthoxysilane, du γ-glycidoxypropyltriméthoxysilane, du γ-glycidoxyéthyltriméthoxysilane, du β-(3,4-époxycyclohexyl)propyltriméthoxysilane, du β-(3,4-époxycyclohexyl)éthylméthyldiméthoxysilane, de l'isocyanatopropyltriéthoxysilane, de l'isocyanatopropylméthyldiméthoxysilane, du β-cyanoéthyltriméthoxysilane, du γ-acryloxypropyltriméthoxysilane, du γ-méthacryloxypropylméthyldiméthoxysilane, du 4-amino-3,3-diméthylbutyltriméthoxysilane, de la N-éthyl-3-triméthoxysilyl-2-méthylpropanamine et leurs mélanges.

11. Composition selon la revendication 9 ou 10 dans laquelle le tensioactif est un tensioactif non ionique choisi dans le groupe constitué du polyéthylène glycol, du polypropylène glycol, de l'huile de ricin éthoxylée, de l'éthoxylate d'acide oléique, des éthoxylates d'alkylphénol, des copolymères d'oxyde d'éthylène et d'oxyde de propylène et des copolymères de silicones et de polyéthers, des copolymères de silicones et des copolymères d'oxyde d'éthylène et d'oxyde de propylène et de leurs mélanges, de préférence choisi dans le groupe constitué des copolymères d'oxyde d'éthylène et d'oxyde de propylène, des copolymères de silicones et de polyéthers, des copolymères de silicones et des copolymères d'oxyde d'éthylène et d'oxyde de propylène et leurs mélanges.

12. Composition selon l'une quelconque des revendications 9 à 11 dans laquelle la charge autre que le nanocomposite inorganique-organique est choisie dans le groupe constitué du carbonate de calcium, du carbonate de calcium précipité, du carbonate de calcium colloïdal, du carbonate de calcium traité avec les composés de stéarate ou d'acide stéarique, de la silice sublimée, de la silice précipitée, des gels de silice, des silices hydrophobisées, des gels de silice hydrophiles, du quartz concassé, du quartz broyé, de l'alumine, de l'hydroxyde d'aluminium, de l'hydroxyde de titane, de l'argile, du kaolin, de la bentonite, de la montmorillonite, de la terre de diatomées, de l'oxyde de fer, du noir de carbone et du graphite, du mica, du talc et de leurs mélanges.
